# EUROPEAN PATENT APPLICATION

(11) **EP 2 727 727 A1**
(43) Date of publication of application: **07.05.2014**
(21) Application number: 12190908.9
(22) Date of filing: 31.10.2012
(51) Int. Cl.: B32B 29/08, B32B 29/02, B32B 7/12, B65D 65/40, B65D 81/26, B65D 81/38

(54) **Packaging laminates**

(71) Applicant: The Wool Packaging Company Limited, Market Drayton Shropshire TF9 4AG (GB)
(72) Inventor: Morris, Angela Frances, Market Drayton, Shropshire TF9 4AG (GB)
(74) Representative: Davies, Elliott

(57) **Abstract**

A laminated packaging sheet for forming into a generally rigid insulated package, the sheet comprising a relatively stiff layer of board, such as corrugated cardboard, and a pliable liner secured to one side of the board, the liner being comprised of fibrous strands, such as felted wool, the strands being compressed from their natural condition and retained in that compressed condition, such as by needle stitching, to thereby trap air between the strands and act as a heat insulant, the strands also acting to, in use, absorb moisture therewithin or thereupon.

## Description

This invention relates to packaging laminates and in particular sheets of such laminates that can be cut and bent to form e.g. cartons of varying shapes and sizes.

It is well known, such as from US patent number 4,765,534, to make packaging laminates in the form of corrugated cardboard in which the stiffness of the laminate is improved by the corrugations being sandwiched between respectively opposite outer layers of paper or cardboard glued to the outermost edges of the corrugations, which not only improves stiffness or rigidity but also provides a degree of impact resistance and thermal insulation. For these reasons conventional cartons for e.g. the fast food industry, such as pizza delivery cartons, are made of corrugated cardboard laminate, typically with one side of the laminate embossed or otherwise printed over with marketing information such as branding. Whilst these cartons are very cheap to produce and offer limited protection against mechanical damage to the contents, as well as being reasonably efficient for the purposes of keeping the contents warm until delivery has been made, the natural tendency of the cardboard to absorb some of the moisture from the pizza, leading to the risk of the pizza lid sagging, but not enough to absorb all the moisture from the pizza, which thereby rapidly becomes soggy throughout. The effects of both of these disadvantages increases over time so that there is a practical limit on how long it can take to deliver a freshly baked pizza before its condition or the condition of the cardboard pizza box is unacceptable to the consumer.

It is also well known from e.g. US patent number 1601625 that the properties of natural wool can be used in packaging in order to absorb moisture and/or to thermally insulate the contents, such as by the use of layers of wool fixed to the walls of a cardboard pizza storage carton as is shown in W02010/119140. However, as will be appreciated, the relatively bulky nature of wool can take up significant volume within the packaging and requires containment in e.g. individual pockets or pillows, one for each wall of the storage carton, which increases the complexity of the packaging and is conducive to mass manufacture only for specifically dimensioned and shaped cartons, where the crease lines are between respectively adjacent pockets or pillows of wool.

Packaging of the foregoing type can find use in many industry sectors, such as in the medical field where pharmaceuticals or donor organs are required to be transported over relatively long periods, such as 24 to 72 hours, but where it is essential to keep the contents of the packaging within a relatively closely defined thermal range. This may be hot, warm, cool or cold, depending upon the contents of the packaging but where, in each case, the properties of wool are able to assist in providing the necessary insulation and minimising the thermal gradient until delivery of the package.

The present invention is derived from the realisation that there is a need for a cost effective laminate sheet which obviates the disadvantages referred to above and which may conveniently be used for producing packaging with excellent thermal characteristics and which does not substantially degrade the stiffness or rigidity of the packaging over its intended period of use.

According to a first aspect of the invention there is provided laminated packaging sheet for forming into a generally rigid insulated package, the sheet comprising a relatively stiff layer of board, such as corrugated cardboard, and a pliable liner secured to one side of the board, the liner being comprised of fibrous strands, such as felted wool, the strands being compressed from their natural condition and retained in that compressed condition, such as by needle stitching, to thereby trap air between the strands and act as a heat insulant, the strands also acting to, in use, absorb moisture therewithin or thereupon.

With this arrangement, the laminated sheet can be mass produced and subsequently cut and formed from a roll into packaging of any required shape without the need, separately, to provide insulation within the package or its contents, which may be initially hot, in the case of fast foods such as pizzas, or initially cold in the case of e.g. medicines, where the packaging may take the form of inner liners for containers made of other materials, such as metal or plastic, for transporting quantities of medicines or other material while keeping them within a required temperature and/or humidity range.

Advantageously, the fibrous strands are aligned, such as by felting, and, following compression, they are held in their compressed condition, such as by needle stitching, i.e. by driving hooked needles through the strands and pulling the needles out, thereby snagging some of the strands so that, instead of being aligned with the rest of the strands they are at least partially orientated transverse thereto. Conveniently, the strands may comprise a layered mix of different material, such as virgin wool for forming an outer layer and recycled wool or other material in an inner layer.

Embodiments of the present invention will now be described by way of example only and with reference to the accompanying drawings, in which:
Figure 1 is a cross-sectional view of a laminated packaging sheet according to an embodiment of the present invention;
Figure 2 is a plan view of a pre-cut sheet or blank, of laminated packaging sheet according to an embodiment of the present invention;
Figure 3 is a perspective view of a carton according to an embodiment of the present invention;
Figure 4 is a perspective view of a drink container according to an embodiment of the present invention; and,
Figure 5 is a perspective view of a drink container holder according to an embodiment of the present invention.

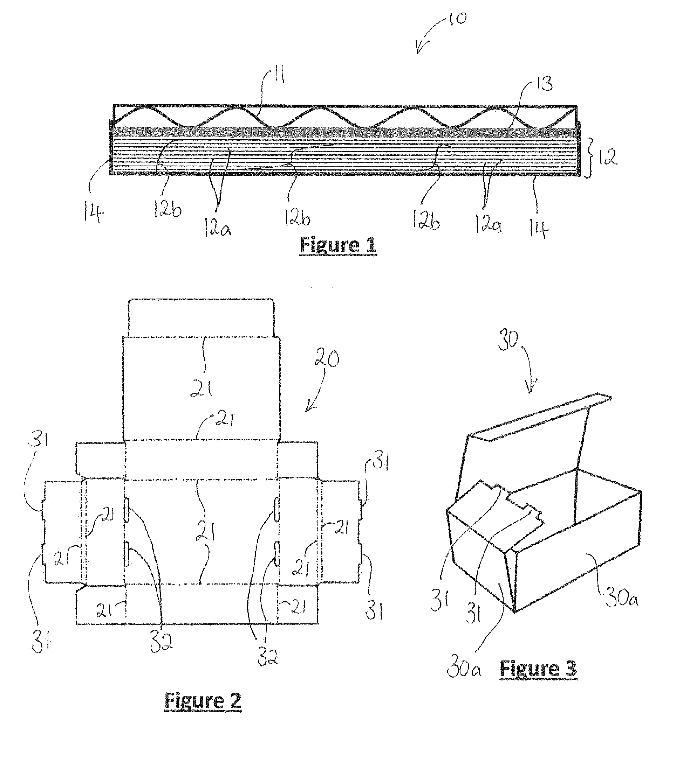

Referring to figure 1 of the drawings, there is illustrated a laminated packaging sheet 10 according to an embodiment of the present invention, for providing thermal insulation. The sheet 10 comprises a relatively stiff layer of corrugated cardboard 11 and a relatively pliable liner 12 secured to one side of corrugated board 11 by an adhesive 13, for example. Conveniently, the liner 12 may be secured to the corrugated board 11 by a soluble adhesive, such as starch, so that above a chosen level of water content the adhesive dissolves when for example the sheet 10 or a carton made from the sheet 10 has been composted.

In the present embodiment, the liner 12 comprises a layer of felt material comprising a plurality of fibrous strands 12a. The strands 12a are substantially aligned and held in a compressed condition by holding strands 12b which extend substantially transverse to the aligned direction. The holding strands 12b may be formed by driving hooked needles (not shown) through the aligned strands 12a and pulling the needles out, thereby snagging some of the strands 12b so that, instead of being aligned with the rest of the strands 12a the holding strands 12b are at least partially orientated transverse thereto. The laminated packaging sheet 10 may also comprises a moisture permeable layer 14 which covers the fibrous strands 12a, 12b to prevent or inhibit the fibrous strands from touching the contents of e.g. a carton manufactured using the laminated sheet, which carton may thereafter be recyclable or fully compostable.

The fibrous strands 12a forming the liner 12, are compressed to a point for optimal thermal insulation, without compromising the capability of the material to provide a convection or circulation of air between the strands 12a across the liner. This circulation of air is a necessary to facilitate an exchange of moisture with contents of a carton formed using the sheet 10, for example, and thus to provide a humidity control within the carton.

The thermal insulative benefits of the compressed wool of the packaging sheet 10 have been demonstrated in a controlled environment. During the experiment, two square samples of pure wool were tested using a Fox 200 heat flow meter manufactured by LaserComp, Inc, with each sample being approximately 200 mm² and weighing approximately 28g. One sample was uncompressed and had a thickness of 35mm, whereas the other sample was compressed to a thickness of about 10mm. Ambient temperature was 21°C with relative humidity at 67%. The thermal plates were set at 0°C and +20°C respectively to produce a mean temperature of 10°C with water being used as the coolant to maintain these plates to within 0.03°C by means of Peltier heating and cooling. Each initial test run lasted well over 2.5 hours, during which each sample gained weight by about 0.2gms, (later tests were well over 7 hours, although it was found that by 2 hours equilibrium was generally reached). At the end of each initial test the Lambda values (W/m.°K) were, respectively, 0.0396 and 0.02983. These tests showed conclusively and counter-intuitively that compression of the wool actually increased its thermal insulation properties, and was sufficient to show that compressed wool or wool composites can be used in packaging without seriously compromising the available space for the packaged item or the properties of the wool. Later tests confirmed this general principal.

Referring to figure 2 of the drawings, there is illustrated a pre-cut sheet or blank 20 of laminated sheet 10 provided with e.g. mitres 21 or other pre-cut shapes by which connected sections of the blank 20 can thereafter be shaped to form cartons 30, an embodiment of which is illustrated in figure 3 of the drawings, having the internal shape of another container. The outer walls 30a of the carton 30 comprise corrugated board 11, such as cardboard, and the inner walls are comprised of or include fibrous strands as the liner 12, either with or without the protective but permeable cover 14 for the liner 12. The blank 20 comprises a plurality of tabs 31 and apertures 32 formed therein which are arranged to cooperate when the blank 20 is folded to form the carton 30, to lock the shape of the carton 30. The carton 30 may then placed within the container to provide thermal insulation. This is particularly advantageous where e.g. robust plastics or metal containers are being used to transport delicate goods such as human tissue or medicines (not shown) requiring residence during transport within a tightly defined range of temperatures, such as between 2°-8° C for a relatively long period of time, such as 72 hours. In a similar vein, fresh food, such as meat, fish, fruit and vegetables (not shown), can be transported in strong but lightweight bins or other such containers so that they are able to withstand the mechanical handling stresses during transport, while the goods themselves are cocooned within an easily replaceable carton 30 made from the laminated sheet 10 of the invention, which therefore assists in protecting the contents of the carton from mechanical shock, insulates the contents sufficiently to ensure that they arrive at their destination still within the required temperature range and ensures that the correct level of humidity is maintained.

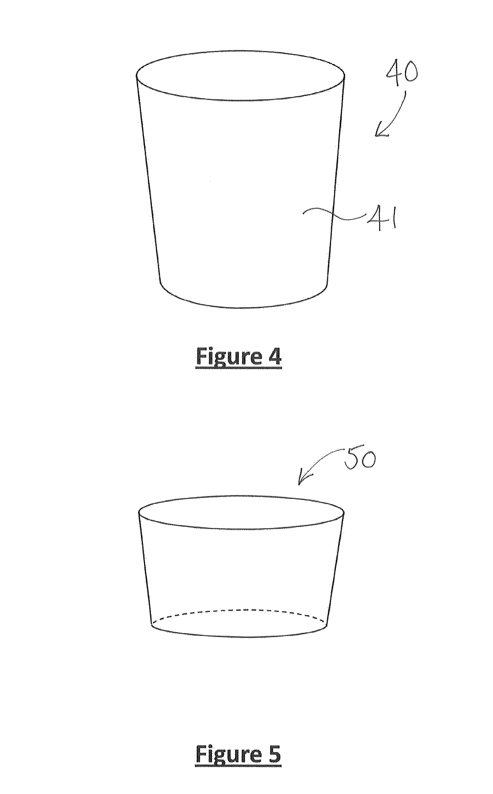

Referring to figure 4 of the drawings, there is illustrated a drink container 40 according to an embodiment of the present invention, comprising container walls 41 which may be formed of laminated packaging sheet 10. The compressed wool or wool substitute forms part of the walls 41 of the container 40 to provide thermal insulation between the contents of the container 40 and an external side of the container walls.

In a further aspect, the present invention extends to a drink container holder 50, an embodiment of which is illustrated in figure 5 of the drawings. The holder 50 may be formed of a laminated sheet 10 and is arranged to extend around an outer side of a conventional drink container, such as a paper or plastics cup, to provide thermal insulation from the contents of the container.

## Claims

1. A laminated packaging sheet for forming into a generally rigid insulated package, the sheet comprising a relatively stiff layer of board, a relatively pliable liner secured to one side of the board, the liner being comprised of fibrous strands, the strands being compressed from their natural condition and retained in that compressed condition, to thereby trap air between the strands and act as a heat insulant, the strands also acting to, in use, absorb moisture therewithin or thereupon.

2. A packaging sheet according to Claim 1 wherein the fibrous strands are aligned and following compression, they are held in their compressed condition.

3. A packaging sheet according to Claim 1 or Claim 2 wherein the strands comprise a layered mix of different material, for forming an outer layer and an inner layer.

4. A packaging sheet according to any preceding Claim including a moisture permeable layer, which covers the liner.

5. A packaging sheet according to Claim 4 wherein the liner is fixed to the corrugated board by a soluble adhesive, so that above a chosen level of water content the adhesive dissolves.

6. A pre-cut blank of laminated packaging sheet according to any preceding Claim provided with mitres or other pre-cut shapes by which connected sections of the blank can thereafter be bent to form cartons having the internal shape of another container into which the blank is then placed to provide thermal insulation.

7. A carton made from laminated sheet according to any preceding Claim in which the outer walls are corrugated board, and the inner walls are comprised of or include fibrous strands as the liner, either with or without a protective but permeable cover for the liner.

8. A drink container insulated by compressed wool or wool substitute forming part of the walls of the container.

9. A drink container holder insulated by compressed wool or wool substitute for providing thermal insulation from contents of the container.
